# FASCICULE DE BREVET EUROPEEN

(11) **EP 0 933 913 B1**
(45) Date de publication et mention de la délivrance du brevet: **15.10.2003**
(21) Numéro de dépôt: 98402659.1
(22) Date de dépôt: 26.10.1998
(51) Int. Cl.: H04M 3/20

(54) **Procédé et équipement d'interception de communications téléphoniques**
Verfahren und Gerät zum Abfangen von Fernsprechkommunikationen
Method and device for intercepting telephone communications

(30) Priorité: 30.01.1998 WO PCT/FR98/00183
(43) Date de publication de la demande: 04.08.1999
(73) Titulaire: ALCATEL, 75008 Paris (FR)
(72) Inventeur: Klein, Nicole, 44800 Saint Herblain (FR); Maillet, Alain, 44240 La Chapelle sur Erdre (FR)
(74) Mandataire: Sciaux, Edmond

(56) Documents cités:
- EP-A- 0 724 349
- WO-A-97/41678
- FR-A- 2 749 998
- US-A- 5 590 171
- PATENT ABSTRACTS OF JAPAN vol. 006, no. 234 (E-143), 20 novembre 1982 & JP 57 135560 A (NIPPON DENKI KK), 21 août 1982
- PATENT ABSTRACTS OF JAPAN vol. 006, no. 028 (E-095), 19 février 1982 & JP 56 149160 A (HITACHI LTD), 18 novembre 1981
- YEN S -L ET AL: "INTELLIGENT MTS MONITORING SYSTEM" PROCEEDINGS OF THE ANNUAL INTERNATIONAL CARNAHAN CONFERENCE ON SECURITY TECHNOLOGY, ALBUQUERQUE, OCT. 12 - 14, 1994, no. CONF. 28, 12 octobre 1994, pages 185-187, XP000492127 SANSON L D
- PATENT ABSTRACTS OF JAPAN vol. 008, no. 231 (E-274), 24 octobre 1984 & JP 59 112751 A (NIPPON DENKI KK), 29 juin 1984

## Description

Le domaine de l'invention est celui des télécommunications. Plus précisément, l'invention concerne les systèmes destinés à l'écoute légale, encore appelés systèmes d'interception de communications.

Des systèmes d'interception de communications téléphoniques sont déjà connus, depuis longtemps, dans le cadre des systèmes d'écoutes légales (c'est à dire sous le contrôle d'une autorité prédéfinie, classiquement au niveau d'un Etat).

La technique la plus ancienne consiste à venir faire un repiquage physique sur les câbles d'un abonné que l'on désire surveiller. Cette technique est malheureusement peu pratique à mettre en oeuvre, et aisément détectable. De plus, elle n'est pas compatible avec les communications numériques (réseau numérique intégration de service RNIS) ni avec les systèmes de radiocommunication avec des mobiles.

Une autre technique consiste à tout analyser ce qui circule sur une ligne donnée, puis à en extraire l'information pertinente. On conçoit aisément que cette solution est lourde et complexe, et peu adaptée à une écoute universelle, quel que soit le système de communication utilisé.

Encore une autre technique connue est de créer, à l'intérieur de l'autocommutateur auquel l'abonné à intercepter est connecté, un pont de conférence. Le problème de cette technique est que les défauts dus aux différents intervenants dans le pont de conférence, et notamment à l'intercepteur, s'additionnent. Il est donc relativement aisé de le détecter. De plus, il n'est pas possible, selon cette technique, d'effectuer plusieurs interceptions d'un même abonné.

Dans certaines situations, il est pourtant souhaitable que cela puisse être possible. Cela est en particulier le cas lorsque le même système de communication couvre des zones géographiques contrôlées par des autorités distinctes. Par exemple, un satellite de radiocommunication peut classiquement couvrir plusieurs Etats, disposant chacun de leur propre loi et leurs propres besoins en matière d'écoutes légales. En conséquence, différents centres de gestion d'écoute (un par zone) doivent être prévus. Bien sûr, un même abonné doit pouvoir, le cas échéant, être intercepté par plusieurs de ces centres.

D'une façon générale, les différents systèmes connus présentent au moins certains des inconvénients suivants :
- ils sont aisément repérables par un abonné ;
- ils nécessitent un traitement très important pour extraire l'information utile des signaux interceptés ;
- ils ne peuvent pas être utilisés indifféremment sur tous types de réseaux (réseau de téléphonie analogique, réseau numérique, réseau de radiocommunication cellulaire, réseau de communication par satellite, ...) ;
- ils ne permettent pas l'interception d'une même communication au profit de différents centres associés à des zones géographiques distinctes ;
- ils ne permettent pas de lutter de façon complète et efficace contre les techniques de reroutage de communication, ou de changement de numéros d'abonné ;
- ils ne permettent pas une transmission des données interceptées vers plusieurs centres de contrôle distincts.

L'invention a notamment pour objectif de pallier ces différents inconvénients de l'état de l'Art.

Plus précisément, un premier objectif de l'invention est de fournir un procédé d'interception d'appels émis et/ou reçus par un abonné, quel(s) que soit(ent) le ou les systèmes de communication mis en oeuvre, et même lorsque l'abonné fait usage de moyens particuliers tel que le reroutage d'appels, le transfert d'appel, le changement de numéros...

Un autre objectif de l'invention est de fournir un tel procédé, qui permette de relever tous types de communications (voix, fax, données), ainsi que toutes les informations de signalisation souhaitées.

L'invention a également pour objectif de fournir un tel procédé, qui nécessite un traitement simple et efficace des données à intercepter, et qui soit totalement indétectable pour les abonnés.

Encore un autre objectif de l'invention est de fournir un tel procédé, qui permette de réaliser des écoutes de façon sélective sur des zones géographiques distinctes, et de transmettre une communication interceptée vers plusieurs centres de gestion des interceptions, correspondant respectivement à ces zones géographiques, ou correspondant à différents bénéficiaires (justice, police,...).

L'invention a également pour objectif de fournir un tel procédé, qui permette une écoute sélective d'un groupe de lignes (correspondant par exemple à l'ensemble des lignes mis en oeuvre dans le cadre d'un salon, ou à l'ensemble des lignes d'une entreprise).

Ces objectifs, ainsi que d'autres qui apparaîtront plus clairement par la suite, sont atteints selon l'invention à l'aide d'un procédé d'interception d'une communication téléphonique, dans un système de télécommunication mettant en oeuvre au moins un équipement de commutation, caractérisé en ce qu'il consiste à :
- déporter sur une boucle d'interception, prévue au niveau dudit équipement de commutation, au moins les données de parole d'un multiplex d'impulsions codées contenant la communication à intercepter, et les transmettre à un équipement d'interception ;
- et consiste à transmettre sur une ligne dédiée, depuis des moyens de contrôle de l'équipement de commutation gérant ladite communication à intercepter, vers cet équipement d'interception, au moins une partie des données de signalisation, dites d'interception, qui sont utilisées pour l'interception de la communication à intercepter.

Grâce à la ligne dédiée, il est possible de transmettre au centre d'interception autorisé, des données de signalisation qui ne sont pas présentes dans la signalisation de la ligne d'abonné, et qui ne sont donc pas prélevables sur la boucle d'interception, mais qui sont nécessaires pour de nouvelles fonctions d'interception :
- des informations sur l'activation des services demandés par l'abonné à surveiller ;
- des informations sur l'existence ou la résiliation de l'abonnement de l'abonné à surveiller ;
- des informations sur la zone géographique où se trouve présentement l'abonné à surveiller.

Ainsi ce procédé permet de réaliser des écoutes de façon sélective sur des zones géographiques distinctes, et de transmettre une communication interceptée vers plusieurs centres de gestion des interceptions, correspondant respectivement à ces zones géographiques, ou correspondant à différents bénéficiaires.

Selon un mode de mise en oeuvre préférentiel, le procédé consiste
- déporter sur ladite boucle d'interception uniquement les données de parole d'un multiplex d'impulsions codées contenant la communication à intercepter,
- et transmettre toutes les données de signalisation d'interception, par ladite ligne dédiée.

Par exemple, il consiste à transmettre séparément, sur la ligne dédiée, toutes les données de signalisation d'interception supplémentaires telles que l'identificateur de l'abonné, l'identificateur de son correspondant, et l'identificateur de la zone où se trouve l'abonné.

Ainsi la seule connaissance du contenu du signal prélevé n'est pas suffisante pour effectuer réellement une interception. En effet, le signal prélevé ne contient que les informations permettant l'écoute de la parole. Il ne permet pas de connaître l'identificateur de l'abonné, l'identificateur de son correspondant, et l'identificateur de la zone. Ce procédé présente donc une sécurité accrue contre des interceptions illicites qui seraient basées seulement sur des données prélevées au niveau de la boucle d'interception.

Ledit système de télécommunication peut notamment appartenir au groupe comprenant :
- les réseaux de communication analogiques ;
- les réseaux de communication numérique à intégration de services ;
- les réseaux de radiocommunication cellulaires ;
- les réseaux de radiocommunication par satellites.

L'invention a aussi pour objet un équipement d'interception d'une communication téléphonique, dans un système de télécommunication mettant en oeuvre au moins un équipement de commutation, comprenant une boucle d'interception formée au niveau dudit équipement de commutation, et sur laquelle les signaux de parole d'un multiplex d'impulsions codées contenant la communication à intercepter sont déportés, avant d'être dirigés vers le destinataire ;
caractérisé en ce qu'il comprend en outre une ligne dédiée pour transmettre, d'un centre de contrôle de l'équipement de communication à un équipement d'interception, au moins une partie des données de signalisation dites d'interception qui sont utilisées pour l'interception de la communication à intercepter.

Avantageusement, ledit équipement d'interception est caractérisé en ce qu'il comprend des moyens de transmission d'une communication interceptée, vers plusieurs centres d'écoute correspondant respectivement à des zones géographiques d'interception distinctes. En effet, selon l'invention, il n'y a aucune limitation intrinsèque au nombre de centres d'écoute alimentés. De façon préférentielle, chacun desdits centres d'écoute correspond à une zone géographique d'interception, telle qu'un état ou une région administrative. Bien sûr, plusieurs centres d'écoute peuvent être affectés à une même zone géographique.

Chacune desdites zones géographiques d'interception est par exemple définie par au moins une des informations appartenant au groupe comprenant :
- une liste d'identifiants de cellules d'un réseau cellulaire formant ladite zone géographique d'interception ;
- une liste de préfixes de numérotation affectés à ladite zone géographique d'interception ;
- au moins une information, fournie via un paramètre de signalisation, définissant la zone géographique d'interception concerné par la communication à intercepter ;
- au moins une information, fournie par l'équipement de commutation, définissant la zone géographique d'interception concerné par la communication à intercepter.

On obtient ainsi une très grande souplesse, la technique de l'invention permettant de décorréler les zones géographiques d'interception et les zones de couverture des équipements de commutation. L'interception peut couvrir une pluralité de lignes correspondant à une même origine et/ou à une même destination (par exemple un salon, une entreprise,...). Il n'y a aucune restriction en ce qui concerne les systèmes de communication utilisés (notamment les systèmes numériques et mobiles).

D'autres caractéristiques et avantages de l'invention apparaîtront plus clairement à la lecture de la description suivante d'un mode de réalisation préférentiel de l'invention, et des dessins annexés, parmi lesquels :
- la figure 1 illustre le principe général du procédé d'interception selon l'invention ;
- la figure 2 présente l'architecture complète d'un système selon la figure 1, adaptée au système Globalstar.

### 1 - Glossaire

Afin de simplifier la lecture de la description suivante et des figures, on liste ci-dessous les principaux acronymes utilisés, ainsi que leur traduction anglaise usuelle :
BSS : station de base (base station) ;
IA : zone d'interception (interception area) ;
IE : équipement d'interception (interception equipment) ;
IMC : centre de gestion des interception (interception management center) ;
IRI : informations concernant une interception (interception related information) ;
LE : commutateur local (local exchange) ;
LEA : agence d'écoute légale (lawful enforcement agency) ;
LEMF : centre de contrôle des autorisations légales (lawful enforcement monitoring facilities) ;
MIC : multiplex d'impulsions codées (PCM : pulse coded multiplex) ;
MSC : centre de commutation pour mobiles (mobile switching center) ;
MSISDN : numéro international de station mobile ISDN (international mobile station ISDN number) ;
RCP : point de contrôle radio (radio control point) ;
SSP : point de commutation de service (service switching point).

### 2 - Principe général de l'invention

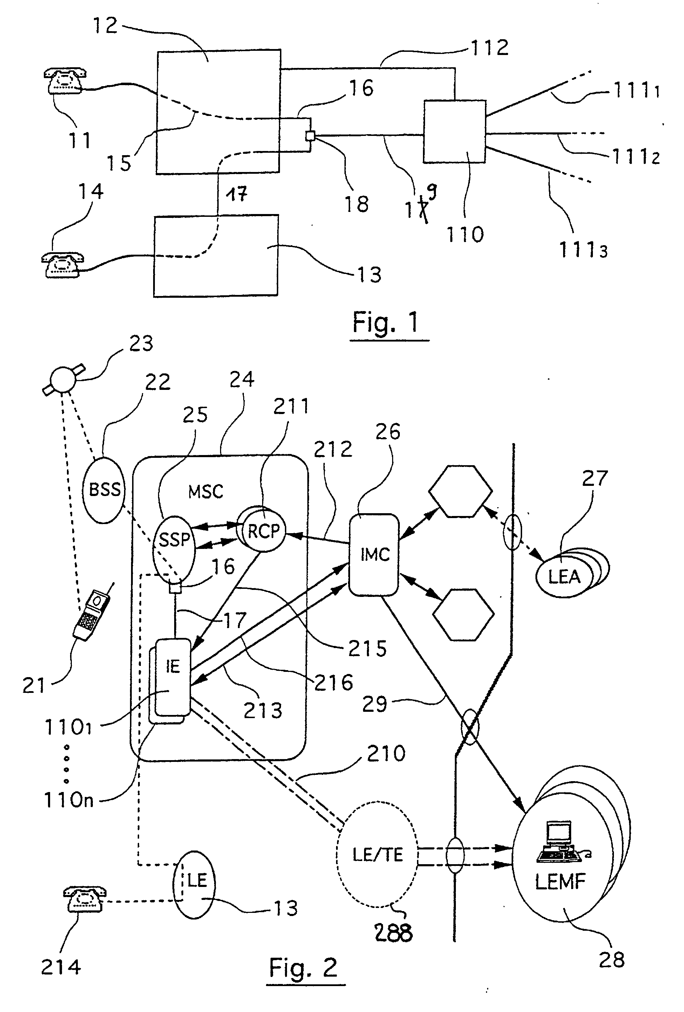

**La figure 1** illustre le principe général de l'invention. Comme précisé plus haut, l'objectif de l'invention est notamment de permettre d'effectuer des interceptions d'appels téléphoniques émis et/ou reçus par un terminal téléphonique cible 1 1. Ce terminal téléphonique cible peut être de tout type (analogique, numérique, fixe, portable,...). Il peut également correspondre à un ensemble de terminaux identifiés (correspondant par exemple à un ensemble de lignes d'une entreprise ou d'un salon).

Classiquement, le terminal cible 11 est connecté à un réseau téléphonique, via un commutateur local 12 (LE), lui-même relié via le réseau téléphonique au commutateur local 13 dont dépend le terminal 14 de l'autre partie à la communication.

Selon l'invention, le multiplex d'impulsions codées (MIC) 15 portant la communication dans le commutateur 12 est dérivée vers une boucle MIC 16 spécifique, avant de rejoindre classiquement (17) l'autocommutateur distant 13. Sur la boucle MIC 16, on effectue un prélèvement 18 à haute impédance. Le signal prélevé à haute impédance est transmis (19) à un équipement d'interception (El) 110, qui peut diriger les appels interceptés vers un ou plusieurs centres d'écoute (IMC) 111₁ à 111₃.

Ainsi, l'interception a lieu à un moment où la parole est aisément décodable. Cette interception est indétectable, et notamment imperceptible par l'abonné.

Deux options sont possibles :
- on peut prélever sur la boucle MIC 16 les données d'interception associées à l'appel, et la parole ; ou
- on peut ne prélever que la parole, en fonction d'informations d'interception de signalisation transmises sur une ligne distincte 112 (qui délivre par exemple les informations d'interception PS permanent signal et CIC circuit identification code).

Par ailleurs, on notera que la boucle MIC 16 peut être locale (à l'intérieur du commutateur 12), ou déportée en tout lieu adéquat. Il en est de même pour l'El 110.

Bien qu'une seule boucle 16 soit représentée, il est clair que plusieurs boucles similaires peuvent être mises en oeuvre dans un commutateur.

### 3 - Exemple : le système Globalstar

On présente maintenant un mode de réalisation particulier de l'invention, adapté au réseau Globalstar. Dans le cadre de ce réseau, un même centre de gestion des interceptions (IMC) peut avoir à gérer plusieurs zones géographiques d'interception (IA) différentes. En effet, la couverture d'un seul satellite peut correspondre à plusieurs Etats, chacun d'entre eux pouvant avoir des règles et des besoins distincts de mise en oeuvre des écoutes légales.

**La figure 2** présente l'architecture générale du système mis en oeuvre.

Le terminal mobile cible 21 est en liaison avec une station de base (BSS) 22, via un satellite 23. La BSS 22 est reliée à un point de commutation 25 (SSP) faisant partie d'un centre de commutation 24 (MSC). Le MIC contenant la communication à intercepter passe par la boucle MIC 16 d'interception réalisée sur le SSP 25, puis est dirigée (17) vers le commutateur distant 13 auquel est connecté le terminal distant 14.

Le système d'interception selon l'invention repose donc sur la mise en oeuvre d'un équipement d'interception (IE) 110, ajouté au SSP, et d'un centre de gestion des interceptions (IMC) 26. Il offre notamment les fonctions de supervision du trafic de communication dans une ou plusieurs zones géographiques d'interception (IA) pour des abonnés déterminés, en temps réel.

Le système permet l'interception des informations suivantes :
- informations portées par le canal de parole (parole, fax, données) ;
- les informations concernant l'interception (IRI), comprenant notamment :

- une partie des informations d'utilisation,
- le contenu des messages courts,
- des données complémentaires telles que la date et l'heure des événements et la localisation de la station mobile.

L'interception ayant lieu à haute impédance sur la boucle de MIC 16, celle-ci n'est pas détectable par les parties impliquées dans la communication interceptée, et n'affecte aucun des services des abonnés.

Un ou plusieurs équipements d'interception 110₁ à 110ₙ peuvent être associés à chaque commutateur 25. Un centre de gestion des interceptions 26 peut superviser un ou plusieurs MSC 24.

Selon l'invention, l'IMC 26 peut gérer plusieurs zones géographiques (IA). Une IA est un sous-ensemble de la couverture géographique associée à un satellite 23 et est définie par un ensemble de cellules logiques gérées par un opérateur ou un prestataire de service donné. Cet ensemble de cellules correspond à une zone géographique. L'opérateur ou prestataire de service peut définir une ou plusieurs IA pour couvrir toutes les zones géographiques sur lesquelles il fournit un service.

Plusieurs IA peuvent couvrir, intégralement ou partiellement, une même zone géographique, par exemple dans le cas ou cette zone est couverte par plusieurs opérateurs ou prestataires de service.

Dans une IA donnée, l'interception d'un abonné cible donné est initiée par une autorité légale (LEA). Un centre de contrôle des autorisations légales (LEMF) 28 gère des informations 29 concernant l'interception (IRI) délivrées par l'IMC 26 et les données interceptées 210 délivrées par l'IE 110ᵢ.

Un abonné cible est défini par son identifiant de station mobile (MSISDN). Le ou les numéros MSISDN devant être interceptés, ainsi que les adresses des centres LEMF 28 vers lesquels ces informations doivent être dirigées, sont gérées au niveau de l'IMC 26. Dans cet IMC, la gestion de l'interception repose sur une approche par IA, avec les règles suivantes :
- un abonné cible peut être intercepté dans une ou plusieurs IA ;
- un point de contrôle radio (RCP) 211 peut couvrir plusieurs IA ;
- une IA peut être couverte par plusieurs RCP 211.

Au niveau de l'équipement d'interception 110ᵢ, les données concernant les abonnés cible sont également organisées par IA. Ainsi, un IMC 26 délivre à tous les IE 110₁ à 110ₙ d'un MSC 24 une liste des IA (nom de chaque IA et informations y relatives).

Quand une interception est définie :
- l'IMC 26 émet (212) vers le RCP 211 concerné, c'est-à-dire associé à l'IA, le numéro MSISDN de l'abonné cible ;
- l'IMC 26 transmet (213) à chaque IE 110₁ à 110ₙ du MSC concerné 24, le numéro MSISDN de l'abonné cible et l'identité de l'utilisateur LEMF du LEA 27 auquel doivent être envoyées les informations d'interception.

Quand un abonné cible reçoit ou établit une communication, celle-ci est dirigée par le SSP 25 vers la boucle MIC 16, avant d'être dirigée vers sa destination finale 14.

L'équipement d'interception 110₁ assure notamment les opérations suivantes :
- détermination de l'IA concerné à partir de l'identité de cellules associées à l'appel intercepté, ou à partir du numéro MSISDN de l'abonné intercepté, lorsque sa localisation est inconnue ;
- extraction des informations de signalisation et des données de parole du canal correspondant à la communication interceptée (repérée par les données d'interception 215 délivrées par le RCP 211) ;
- si la communication concerne un abonné à intercepter :
   -- l'équipement d'interception 110ᵢ effectue l'interception, en fonction de données d'interception incluses dans la signalisation associée à l'appel et/ou dans un canal de données dédié inclus dans la boucle 16, et/ou des données d'interception complémentaires reçues du RCP 211 ;
   -- l'IE 110ᵢ émet (216) les données concernant l'interception vers l'IMC 26 ;
   -- l'IE 110ᵢ établit une ou deux communications numériques ISDN (210) vers le LEMF 288 concerné.

Lorsque deux communications 210 sont établies, elles correspondent respectivement à l'émission et à la réception. Lorsqu'une seule communication est établie, l'émission et la réception sont combinées avant transmission.

L'IMC 26 transmet (29) des rapports d'interception au LEMF 28. Pour chaque communication interceptée, un premier rapport est fourni en début de communication, et un second rapport est transmis en fin de communication. Chaque rapport comprend une référence d'interception afin de permettre le lien avec les informations délivrées (210) par l'équipement d'interception.

Le mode de réalisation décrit ci-dessus pourra aisément être adapté à d'autres systèmes de communication, sans sortir du champ de l'invention.

On ne décrit pas en détail le fonctionnement des différents éléments en aval de la boucle d'interception. Ceux-ci ne font en effet pas directement partis de l'invention, et ont déjà fait l'objet de description, par exemple dans le cadre de travaux de normalisation.

## Revendications

1. Procédé d'interception d'une communication téléphonique, dans un système de télécommunication mettant en oeuvre au moins un équipement de commutation (12, 13 ; 24),
**caractérisé en ce qu'**il consiste à :
- déporter sur une boucle d'interception (16), prévue au niveau dudit équipement de commutation (12 ; 24), au moins les données de parole d'un multiplex d'impulsions codées (MIC) contenant la communication à intercepter, et les transmettre à un équipement d'interception (110) ;
- et consiste à transmettre sur une ligne dédiée (112 ; 215), depuis des moyens (211) de contrôle de l'équipement (24) de commutation gérant ladite communication à intercepter, vers cet équipement d'interception (110), au moins une partie des données de signalisation, dites d'interception, qui sont utilisées pour l'interception de la communication à intercepter.

2. Procédé d'interception selon la revendication 1, **caractérisé en ce qu'**il consiste à :
- déporter sur ladite boucle d'interception (16), uniquement les données de parole d'un multiplex d'impulsions codées (MIC) contenant la communication à intercepter,
- et transmettre toutes les données de signalisation d'interception, par ladite ligne dédiée (112 ; 215).

3. Procédé d'interception selon l'une quelconque des revendications 1 à 2, **caractérisé en ce que** ledit système de télécommunication appartient au groupe comprenant :
- les réseaux de communication analogiques ;
- les réseaux de communication numériques à intégration de services ;
- les réseaux de radiocommunication cellulaires ;
- les réseaux de radiocommunication par satellites.

4. Equipement d'interception (110) d'une communication téléphonique, dans un système de télécommunication mettant en oeuvre au moins un équipement de commutation (12, 13 ; 24), comprenant une boucle d'interception (16) formée au niveau dudit équipement de commutation, et sur laquelle les signaux de parole d'un multiplex d'impulsions codées (MIC) contenant la communication à intercepter sont déportés, avant d'être dirigés vers le destinataire (14) ;
**caractérisé en ce qu'**il comprend en outre une ligne dédiée (112 ; 215) pour transmettre, d'un centre (12 ; 211) de contrôle de l'équipement de communication à l'équipement d'interception (110), au moins une partie des données de signalisation dites d'interception qui sont utilisées pour l'interception de la communication à intercepter.

5. Equipement d'interception selon la revendication 4, **caractérisé en ce qu'**il comprend des moyens de transmission (26) d'une communication interceptée, vers plusieurs centres d'écoute (27) correspondant respectivement à des zones géographiques d'interception distinctes.

## Patentansprüche

1. Verfahren zum Erfassen einer Telephonkommunikation in einem Telekommunikationssystem, in dem wenigstens eine Vermittlungsanlage (12, 13; 24) betrieben wird,
**dadurch gekennzeichnet, dass** es darin besteht:
- wenigstens die Sprachdaten eines Impulscode-Multiplexes (MIC), der die zu erfassende Kommunikation enthält, in eine auf Höhe der Vermittlungsanlage (12; 24) vorgesehene Erfassungsschleife (16) zu drängen und die Daten an eine Erfassungsanlage (110) zu senden;
- und darin besteht, auf einer hierzu vorgesehenen Leitung (112; 215) von Mitteln (211 ) zur Steuerung der Vermittlungsanlage (24), die die zu erfassende Kommunikation steuern, zu dieser Erfassungsanlage (110) wenigstens einen Teil der Signalgebungsdaten, sogenannte Erfassungsdaten, die zum Erfassen der zu erfassenden Kommunikation verwendet werden, zu übertragen.

2. Erfassungsverfahren nach Anspruch 1, **dadurch gekennzeichnet, dass** es darin besteht:
- ausschließlich die Sprachdaten eines Impulscode-Multiplexes (MIC), der die zu erfassende Kommunikation enthält, in die Erfassungsschleife (16) zu drängen,
- und alle Erfassungssignalgebungsdaten über die bestimmte Leitung (112; 215) zu übertragen.

3. Erfassungsverfahren nach einem der Ansprüche 1 bis 2, **dadurch gekennzeichnet, dass** das Telekommunikationssystem zu der Gruppe gehört, die umfasst:
- analoge Kommunikationsnetze;
- digitale Kommunikationsnetze mit Dienstintegration;
- Zellen-Funkkommunikationsnetze;
- Satelliten-Funkkommunikationsnetze.

4. Anlage (110) zum Erfassen einer Telephonkommunikation in einem Telekommunikationssystem, in dem wenigstens eine Vermittlungsanlage (12, 13; 24) betrieben wird, mit einer Erfassungsschleife (16), die auf Höhe der Vermittlungsanlage ausgebildet ist und in die die Sprachsignale eines Codeimpuls-Multiplexes (MIC), der die zu erfassende Kommunikation enthält, gedrängt werden, bevor sie zu dem Ziel (14) gelenkt werden;
**dadurch gekennzeichnet, dass** sie außerdem eine Leitung (112; 215) umfasst, die für die Übertragung wenigstens eines Teils der sogenannten Erfassungssignalgebungsdaten, die zum Erfassen der zu erfassenden Kommunikation verwendet werden, von einer Steuerzentrale (12; 211) der Kommunikationsanlage zu der Erfassungsanlage (110) verwendet wird.

5. Erfassungsanlage nach Anspruch 4, **dadurch gekennzeichnet, dass** sie Mittel (26) zum Übertragen einer erfassten Kommunikation an mehrere Abhörzentralen (27), die verschiedenen geographischen Erfassungszonen entsprechen, umfasst.

## Claims

1. A method of intercepting a telephone call in a telecommunications system using at least one switch (12, 13; 24),
the method being **characterized in that** it consists in:
- diverting, in an interception loop (16) in said switch (12; 24), at least the voice data of a pulse coded multiplex (PCM) containing the call to be intercepted, and transmitting it to interception equipment (110); and
- the control means (211) of the switch (24) handling said call to be intercepted transmitting at least a fraction of the signaling "interception" data which is used for intercepting the call to be intercepted, to said interception equipment (110), over a dedicated line (112; 215).

2. An interception method according to claim 1, **characterized in that** it consists in:
- diverting, in said interception loop (16), only the voice data of a pulse coded multiplex (PCM) containing the call to be intercepted; and
- sending all signaling interception data via said dedicated line (112; 215).

3. An interception method according to any of claims 1 to 2, **characterized in that** said telecommunications system is one of the following:
- an analog communications network,
- an integrated services digital communications network,
- a cellular mobile radio network, or
- a satellite radio network.

4. Equipment (110) for intercepting a telephone call, in a telecommunications system using a switch (12, 13; 24), the equipment comprising an interception loop (16) in said switch and to which the voice signals of a pulse coded multiplex (PCM) containing the call to be intercepted are diverted before it is directed to the addressee (14);
the equipment being **characterized in that** it further comprises a dedicated line (112; 215) for transmitting at least a fraction of the signaling "interception" data which is used to intercept the call to be intercepted, from a control center (12; 211) of the switch to the interception equipment (110).

5. Interception equipment according to claim 4, **characterized in that** it comprises means (26) for transmitting an intercepted call to a plurality of telephone tapping centers (27) corresponding to respective separate geographical interception areas.
